# FASCICULE DE BREVET EUROPEEN

(11) **EP 0 784 925 B1**
(45) Date de publication et mention de la délivrance du brevet: **08.05.2002**
(21) Numéro de dépôt: 97400091.1
(22) Date de dépôt: 16.01.1997
(51) Int. Cl.: A01K 1/015

(54) **Granulés absorbants, procédé de fabrication de ces granulés à partir de sépiolite et/ou d'attapulgite pulvérulente et litiéres constituées de ces granulés**
Absorbierende Granulate, Verfahren zu ihrer Herstellung auf der Basis von pulverförmigem Sepiolith und/oder Attapulgith, und diese Granulate enthaltendes Tierstreu
Absorbent granulates, method for producing these granulates from powder sepiolite and/or attapulgite, and litters containing these granulates

(30) Priorité: 19.01.1996 FR 9600612
(43) Date de publication de la demande: 23.07.1997
(73) Titulaire: COMPAGNIE FINANCIERE ET DE PARTICIPATIONS ROULLIER, 35400 Saint-Malo (FR)
(72) Inventeur: Thüring, Paul Antoine, 60000 Beauvais (FR)
(74) Mandataire: Colas, Jean-Pierre

(56) Documents cités:
- EP-A- 0 087 001
- EP-A- 0 348 241
- EP-A- 0 677 244
- WO-A-91/05464
- WO-A-91/06210
- DE-A- 2 916 804
- DE-C- 4 011 254
- US-A- 2 649 759
- US-A- 4 343 751
- US-A- 4 591 581
- US-A- 4 641 605
- US-A- 4 671 208
- US-A- 5 279 259
- US-A- 5 529 022

## Description

L'invention concerne des granulés absorbants, un procédé de fabrication de ces granulés et des litières pour chats et autres animaux domestiques ou d'élevage constituées de ces granulés.

De nombreuses litières pour chats sont produites à partir de sépiolite. Cette dernière est une roche tendre et poreuse qu'on extrait de carrières. Après l'extraction, la roche est concassée, tamisée et séchée si nécessaire. La granulométrie marchande est en général comprise entre 1 et 5 mm. En première absorption, elle a un pouvoir de rétention d'eau de 75 à 80% de son propre poids. Après 24 heures et en deuxième absorption, elle ne conserve plus qu'un pouvoir de rétention de 6% et se transforme à raison de 30 à 40% en boue, ce qui pour une litière est un inconvénient important, car les chats, avec leurs pattes déposent des produits boueux sur les sols des appartements.

Le concassage, le tamisage et le séchage éventuel de la sépiolite produit environ 50% de produit marchand d'une granulométrie 1-5 mm et environ 50% de poussières et refus fin dépourvus de valeur et qui sont en général mis à la décharge.

Il serait donc utile de disposer d'un procédé permettant de valoriser ces poussières et refus fin (appelés globalement ci-après sépiolite pulvérulente).

Par ailleurs, DE-B-4 011 254 décrit la production de granulés céramiques absorbants dont le constituant essentiel est de l'argile et qui peuvent facultativement contenir, en outre, à titre d'additifs, de la calcite, du sable de quartz, de la dolomie, du feldspath, de la chamotte, du kieselguhr et/ou de la sépiolite, par un procédé impliquant diverses opérations, en particulier d'expansion ou moussage, de formage et de broyage, ainsi qu'une étape de calcination à une température de 750 à 1050°C.

US-A-4 591 581 décrit la fabrication de particules d'un minéral argileux adsorbantes, utiles comme litière, par un procédé consistant à prendre des particules du minéral argileux d'une taille inférieure à 2 mm, à les sécher à un taux d'humidité inférieur à 15%, à mélanger ces particules avec un additif dispersible dans l'eau ayant des propriétés colloïdales, à compacter ce mélange, à la presse, en des masses compactes, puis à concasser ces masses en particules de 710 µm à 4 mm. Le minéral argileux peut être une smectite, de l'attapulgite ou de la sépiolite. Le procédé ne comporte pas d'étape de calcination.

WO-A-91/05464 revendique une litière pour animaux constituée d'une zéolite et d'une argile colloïdale, qui peut être une argile ayant été partiellement calcinée à une température n'excédant pas 180°C. Dans son préambule, WO-A-91/05464 indique que l'attapulgite, même après avoir été partiellement calcinée à une température inférieure à 180°C, ne forme pas une litière satisfaisante.

Un des objets de la présente invention est de fournir un procédé permettant de produire économiquement, à partir de cette sépiolite pulvérulente sans valeur marchande, des granulés présentant d'excellentes propriétés d'absorption et de rétention de l'urine, ainsi que de résistance au délitage.

Au cours des recherches menées il a également été trouvé que de l'attapulgite pulvérulente pouvait être substituée à la sépiolite, avec d'excellents résultats.

L'invention concerne donc un procédé de fabrication de granulés présentant des propriétés d'absorption et de rétention de l'urine, comprenant une étape de formation de granulés humides à partir de sépiolite et/ou d'attapulgite pulvérulente, caractérisé en ce qu'il comprend en outre, une étape de calcination de ces granulés, à une température d'environ 600 à 650°C.

L'étape de formation de granulés humides peut faire appel à toute technique connue de granulation d'une poudre minérale, telle que, par exemple, la granulation dans un tambour rotatif, à l'assiette, par compactage, ou par extrusion en un jonc et coupe de celui-ci.

Selon un mode de mise en oeuvre préféré, on forme les granulés en formant d'abord une pâte extrudable de sépiolite et/ou d'attapulgite pulvérulente et d'eau. Une proportion d'eau convenable à ajouter peut facilement être déterminée par de simples expérimentations, mais on a trouvé qu'une proportion de 28 à 30% en poids d'eau par rapport à la pâte humide donne souvent une pâte convenable. On extrude ensuite cette pâte à travers une filière d'une extrudeuse à piston ou à vis en un jonc cylindrique d'un diamètre correspondant à la taille désirée pour les granulés (habituellement 3 à 5 mm), puis on coupe ce jonc, à sa sortie de l'extrudeuse, en morceaux (appelés ici granulés humides) de longueur désirée, de préférence sensiblement égale au diamètre du jonc (par exemple 3 à 5 mm). Si désiré, les granulés humides ainsi produits peuvent être arrondis en les passant dans un tambour rotatif pendant qu'ils sont encore mous. Les granulés humides, arrondis ou non, sont alors soumis à une opération de calcination à une température d'environ 600 à 650°C, pour les convertir en granulés absorbants. La durée de la calcination dépend quelque peu de la taille des granulés humides et de leur teneur en eau et de l'équipement de calcination (four) dont on dispose. Usuellement un temps de calcination de six à dix minutes à la température de 600°C convient. La calcination doit être suffisante pour suffisamment consolider les granulés pour qu'ils ne se délitent pas à l'usage au contact de l'urine de l'animal, mais pas excessive au point de dégrader exagérément ses propriétés d'absorption et de rétention de ladite urine. De simples essais de routine permettront à l'homme du métier de déterminer un temps de calcination convenable.

De préférence, l'étape de calcination est réalisée dans un four électrique. On a, en effet, constaté que l'emploi d'un four à gaz ou au fioul provoquait un noircissement indésirable du produit.

Le procédé de l'invention permet d'obtenir, à partir du déchet sans valeur qu'est la sépiolite pulvérulente ou bien à partir d'attapulgite pulvérulente, des granulés utiles comme litière, par exemple pour chats et autres animaux domestiques ou d'élevage de haute qualité, ayant un pouvoir élevé d'absorption de l'urine tant le premier jour d'utilisation (premier arrosage par l'urine) que les jours suivants, ainsi qu'une excellente résistance au délitage au contact de l'urine et à l'écrasement sous le poids de l'animal. Notamment dans le cas de chats, ceci permet de garder plus longtemps la même litière et donc de réduire le coût et les efforts nécessaires à l'entretien des bacs. En outre, le fait que les granulés ne se délitent pas, c'est-à-dire ne forme pas une boue au contact de l'urine, contribue au maintien de la propreté des sols de l'habitation.

Le procédé de l'invention permet, par ailleurs, d'incorporer facilement dans les granulés des additifs divers, citons notamment des désinfectants, des stimulants olfactifs spécifiques de l'animal dont il s'agit, par exemple du chat, ou des pigments minéraux ou des colorants organiques pour colorer les granulés, par exemple en vert ou en bleu. Ces additifs peuvent être soit incorporés lors de la formation de la pâte dans le cas des pigments minéraux, soit appliqués après la formation des granulés, par exemple par pulvérisation, dans le cas des additifs organiques.

Le procédé de l'invention permet, en outre, de produire, avec un rendement de pratiquement 100%, des granulés de taille régulière et exempts de poussières.

L'invention concerne également des granulés de sépiolite et/ou d'attapulgite, pouvant être obtenus par le procédé de l'invention, présentant des propriétés d'absorption et de rétention de l'urine, caractérisé en ce qu'ils sont constitués de particules de sépiolite et/ou d'attapulgite agglomérées et calcinées.

Les granulés de l'invention se caractérisent, en outre, en ce qu'ils présentent, sur une période d'utilisation de 7 jours comme litière pour chat, une capacité cumulée d'absorption de l'urine supérieure à 150% de leur poids et une formation substantiellement nulle de boue.

Avantageusement les granulés ont un diamètre régulier de 3 à 5 mm.

Ces granulés peuvent contenir, en outre, divers additifs, tels que ceux mentionnés ci-dessus à propos du procédé de l'invention.

L'exemple non limitatif ci-après est donné dans le but d'illustrer l'invention.

### EXEMPLE 1

### Mode opératoire de préparation de granulés effectué en laboratoire pilote -

- On pèse 7 kilos de sépiolite en poudre.
- On introduit les 7 kilos de sépiolite en poudre dans un malaxeur discontinu à arbre vertical de 12 litres tournant à 300 tours/minute.
- On introduit progressivement, en l'espace de 1 minute, 3 litres d'eau.
- Après 2 minutes de malaxage, le mélange sépiolite-eau se présente sous la forme d'une pâte granuleuse.
- On introduit progressivement ce mélange granuleux dans une extrudeuse à vis équipée d'un disque percé de trous au diamètre de 3 mm. A la sortie du disque les joncs sont coupés à la longueur de 3 à 4 mm et forment des goujons.
- On introduit les goujons dans un petit cylindre à axe horizontal de 0,25 m de diamètre et de 0,6 m de long équipé de deux disques de retenue situés à l'entrée et à la sortie du cylindre. On fait tourner le cylindre à une vitesse de rotation de 28 tours/minute, et on laisse le cylindre tourner pendant 5 minutes pour arrondir les angles des granulés.
- On introduit les granulés arrondis dans un four à moufle électrique dont la température est réglée à 650°C. A l'aide d'un pyromètre à couple thermoélectrique placé au coeur de la masse des granulés, on suit la courbe d'élévation de la température des granulés. Dès que les granulés ont atteint la température de 600°C, on laisse la cuisson se poursuivre pendant 6 minutes.
- On sort les granulés, on les laisse refroidir, et on effectue un tamisage de sécurité sur un tamis à maille de 3 mm (particules < 3 mm inférieures à 1%).

On effectue les premiers tests d'absorption 24 heures après la calcination.

### Essai d'absorption -

Les granulés obtenus ont été soumis à un test d'absorption d'eau simulant l'absorption d'urine de chat. Ce test s'opère comme suit :
- 40 g de granulés sont déposés sur un filtre en papier placé sur un entonnoir et un erlenmeyer
- arrosage avec 100 cm³ d'eau
- pesée de l'eau recueillie dans l'erlenmeyer
- calcul de l'absorption en pourcentage du poids des 40 g de granulés pesés
- sur le même échantillon, renouvellement de la même opération d'arrosage avec 100 cm³ d'eau tous les jours pendant 7 jours et calcul de l'absorption.

A titre comparatif, on a également testé des granulés de sépiolite concassée et tamisée (litière pour chat disponible dans le commerce). Ces résultats obtenus sont récapitulés dans le tableau ci-après.

### EXEMPLE 2

On répète le mode opératoire de l'Exemple 1, si ce n'est qu'on substitue de l'attapulgite pulvérulente à la sépiolite.

On obtient des granules ayant d'excellentes propriétés absorbantes, comme le montre les résultats du Tableau ci-après.

## Revendications

1. Procédé de fabrication de granulés présentant des propriétés d'absorption et de rétention de l'urine, comprenant une étape de formation de granulés humides à partir de sépiolite et/ou d'attapulgite pulvérulente, **caractérisé en ce qu'**il comprend en outre, une étape de calcination de ces granulés à une température d'environ 600 à 650°C.

2. Procédé selon la revendication 1, **caractérisé en ce que** les granulés ont un diamètre régulier de 3 à 5 mm.

3. Procédé selon la revendication 1, **caractérisé en ce que** l'étape de formation des granulés humides comprend les opérations consistant à former une pâte extrudable à partir de sépiolite et/ou d'attapulgite pulvérulente et d'eau, à extruder cette pâte à travers une filière en un jonc cylindrique d'un diamètre correspondant à la taille désirée pour les granulés, et à couper ce jonc en granulés humides de longueur désirée.

4. Procédé selon la revendication. 3, **caractérisé en ce que** le jonc est coupé en morceaux d'une longueur sensiblement égale au diamètre du jonc.

5. Procédé selon la revendication 3 ou 4, **caractérisé en ce que**, en outre, lesdits granulés humides sont soumis à une opération visant à les arrondir.

6. Procédé selon la revendication 1 ou 3, **caractérisé en ce qu'**il comprend, en outre, l'addition, lors de la formation de la pâte, d'un pigment minéral visant à colorer les granulés.

7. Procédé selon l'une quelconque des revendications 1 à 6, **caractérisé en ce qu'**il comprend, en outre, l'application, sur les granulés calcinés, d'au moins un additif choisi dans le groupe constitué par les désinfectants, les stimulants olfactifs spécifiques de l'animal et les colorants organiques.

8. Procédé selon la revendication 1, **caractérisé en ce que** l'étape de calcination est conduite dans un four électrique.

9. Litière pour chat et autres animaux domestiques ou d'élevage, **caractérisée en ce qu'**elle comprend des granulés obtenus par un procédé tel que défini à l'une quelconque des revendications 1 à 8.

## Claims

1. Method of manufacturing granules having properties of absorbing and retaining urine, comprising a stage of formation of moist granules from pulverulent sepiolite and/or attapulgite, **characterised in that** it also comprises a calcination stage of these granules at a temperature of approximately 600 to 650°C.

2. Method according to claim 1, **characterised in that** the granules have a regular diameter of 3 to 5 mm.

3. Method according to claim 1, **characterised in that** the stage of formation of the moist granules comprises operations consisting in forming an extrudable paste from pulverulent sepiolite and/or attapulgite and water, in extruding this paste through a die to form a cylindrical rod of a diameter corresponding to the desired size of the granules, and in cutting this rod into moist granules of the desired length.

4. Method according to claim 3, **characterised in that** the rod is cut into pieces of a length substantially equal to the diameter of the rod.

5. Method according to claim 3 or 4, **characterised in that**, in addition, said moist granules are subjected to an operation intended to impart a rounded shape to them.

6. Method according to claim 1 or 3, **characterised in that** it also comprises the addition, during formation of the paste, of a mineral pigment intended to colour the granules.

7. Method according to any one of claims 1 to 6, **characterised in that** it comprises, in addition, the application to the calcined granules of at least an additive selected from the group consisting of disinfectants, olfactory stimulants specific to the animal and organic colourings.

8. Method according to claim 1, **characterised in that** the calcination stage is carried out in an electric furnace.

9. Litter for cats and other domesticated or reared animals, **characterised in that** it comprises granules manufactured according to a method as defined in any one of claims 1 to 8.

## Patentansprüche

1. Verfahren zur Herstellung von Granulat mit Urin absorbierenden und zurückhaltenden Eigenschaften, das einen Schritt der Bildung von feuchtem Granulat aus pulverförmigem Sepiolith und/oder Attapulgit umfasst, **dadurch gekennzeichnet, dass** es außerdem einen Schritt des Brennens dieses Granulats bei einer Temperatur von etwa 600 bis 650° C umfasst.

2. Verfahren nach Anspruch 1, **dadurch gekennzeichnet, dass** das Granulat einen regelmäßigen Durchmesser von 3 bis 5 mm hat.

3. Verfahren nach Anspruch 1, **dadurch gekennzeichnet, dass** der Schritt der Bildung von feuchtem Granulat Arbeitsgänge umfasst, die darin bestehen, dass ein extrudierbarer Brei aus pulverförmigem Sepiolith und/oder Attapulgit und Wasser gebildet wird, dieser Brei durch eine Düse zu einem zylindrischen Strang mit einem Durchmesser extrudiert wird, der der für das Granulat gewünschten Größe entspricht, und dieser Strang in feuchtes Granulat mit der gewünschten Länge geschnitten wird.

4. Verfahren nach Anspruch 3, **dadurch gekennzeichnet, dass** der Strang in Stücke mit einer Länge im wesentlichen gleich dem Durchmesser des Strangs geschnitten wird.

5. Verfahren nach Anspruch 3 oder 4, **dadurch gekennzeichnet, dass** das feuchte Granulat außerdem einem Arbeitsgang der Abrundung unterzogen wird.

6. Verfahren nach einem der Ansprüche 1 oder 3, **dadurch gekennzeichnet, dass** es außerdem die bei der Bildung des Breis vorgenommene Beigabe eines mineralischen Pigments zur Färbung des Granulats umfasst.

7. Verfahren nach einem der Ansprüche 1 bis 6, **dadurch gekennzeichnet, dass** es außerdem das Aufbringen mindestens eines Zusatzes auf das gebrannte Granulat umfasst, der aus der Gruppe ausgewählt ist, die aus Desinfektionsmitteln, spezifischen olfaktorischen Anregungsmitteln des Tiers und organischen Farbstoffen besteht.

8. Verfahren nach Anspruch 1, **dadurch gekennzeichnet, dass** der Schritt des Brennens in einem elektrischen Ofen durchgeführt wird.

9. Streu für Katzen und andere Haus- oder Zuchttiere, **dadurch gekennzeichnet, dass** sie durch eines Verfahren nach einem der Ansprüche 1 bis 8 hergestelltes Granulats umfasst.
